Europäisches Patentamt

European Patent Office

Office européen des brevets

(19)

(11) **EP 1 176 325 A2**

## (12) EUROPEAN PATENT APPLICATION

(43) Date of publication:
**30.01.2002 Bulletin 2002/05**

(51) Int Cl.[7]: **F16C 39/06**

(21) Application number: **01118169.0**

(22) Date of filing: **26.07.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.07.2000 JP 2000227608**

(71) Applicant: **EBARA CORPORATION**
**Ohta-ku, Tokyo (JP)**

(72) Inventor: **Shinozaki, Hiroyuki**
**Kamakura-shi, Kanagawa-ken (JP)**

(74) Representative: **Wagner, Karl H., Dipl.-Ing. et al**
**WAGNER & GEYER Patentanwälte**
**Gewürzmühlstrasse 5**
**80538 München (DE)**

(54) **Magnetic bearing apparatus**

(57)     There is provided a magnetic bearing apparatus having no necessity of providing a magnetic flux sensor in the vicinity of a supporting electromagnet and no necessity of increasing the number of signal lines in a cable and capable of achieving an advantage similar to a conventional magnet flux feedback type power amplifier in a controller. The magnetic bearing apparatus for supporting a supported member by a magnetic force without contact comprises a current sensor (11) for detecting a control current output from a power amplifier (7) and a displacement sensor (10) for detecting a displacement of the supported member (1).

A control current detection signal Si of the current sensor (11) and a displacement detection signal Sg of the displacement sensor (10) are supplied to an estimator (20) that estimates a magnetic flux or magnetic flux density generated between a surface of the electromagnet (4) and an electromagnetic target (3) on the supported member (1). An estimated value is fed back from the estimator (20) to the power amplifier (7) that supplies a control current i to an electromagnetic coil (6).

EP 1 176 325 A2

## Description

The present invention relates to a magnetic bearing apparatus for supporting an object by a magnetic force without contact and, in particular, to a magnetic bearing apparatus suitable for use in a high-speed rotation apparatus (e.g., a turbo-molecular pump and a centrifugal compressor), a rotary apparatus for semiconductor device manufacturing apparatuses which, though rotating at low speed, advantageously supports an object without contact, a gas circulating fan or the like.

The entire disclosure of Japanese Patent Application No. 2000-227608 filed on July 27, 2000, including the specification, claims, drawings and abstract, is incorporated herein by reference in its entirety.

A control type magnetic bearing apparatus comprises a displacement sensor for detecting a relative displacement with respect to a supported object. On the basis of the relative displacement, a control current is calculated using a predetermined control rule and the result of calculation is fed to a power amplifier which supplies a current to a coil of a supporting electromagnet and drives the electromagnet. Since a load of this power amplifier is an electromagnet coil, its load characteristics can be assumed to be delay characteristics. Due to the delay characteristics, the higher the frequency, the greater the delay generated in its relationship with the control current with respect to a power amplifier input signal.

To improve the delay characteristics, local feedback compensation has long been executed, and there are three known methods of local feedback compensation. In the first method, an electromagnet coil current is detected and fed back to the input of the power amplifier (which is referred to as a "current feedback type power amplifier"). In the second method, a coil voltage applied to the electromagnet coil is detected and fed back to the input of the power amplifier (which is referred to as a "voltage feedback type power amplifier"). In the third method, a magnetic flux generated in a gap between the electromagnet and the supported object is detected and fed back to the input of the power amplifier (which is referred to as a "magnetic flux feedback type power amplifier").

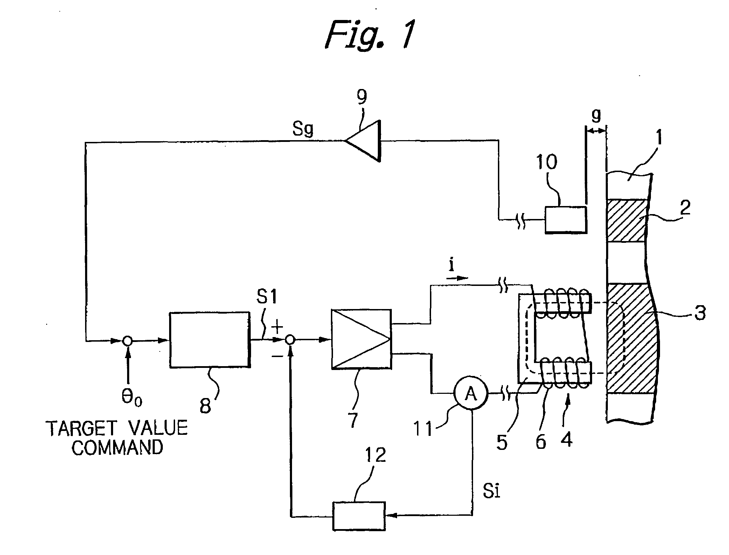

Fig. 1 is a diagram showing a structural example of a magnetic bearing apparatus adopting the current feedback type power amplifier. Fig. 1 shows a one-axis portion of the bearing apparatus. In Fig. 1, reference numeral 1 indicates a supported object, which is provided with a sensor target 2 and an electromagnet target 3. On a supporting member (not shown), there are provided a displacement sensor 10 and an electromagnet 4 in correspondence with the sensor target 2 and the electromagnet target 3, respectively. The displacement sensor 10 is connected to a displacement sensor amplifier 9, which outputs a displacement detection signal Sg indicating a length g of the gap between the displacement sensor 10 and the sensor target 2.

From the displacement detection signal Sg and a target command signal $e_o$, a target position of the supported object 1 is obtained. A compensator 8 is provided with a control rule for positioning the supported object at the target position without any contact, and the output of the compensator 8 is a control command signal S1. The control command signal S1 is input to a power amplifier 7, and a control current i following-up to the control command signal S1 is supplied to an electromagnet coil 6 of the electromagnet 4. At this time, the coil load of the electromagnet 4 is a delay load, so that the electromagnet 4 cannot follow the input signal. To improve the delay characteristics, the control current i of the electromagnet coil 6 is detected by a current sensor 11 to perform local feedback. That is, a control current detection signal Si detected by the current sensor 11 is fed back (negative feedback) to the input of the power amplifier 7 through a regulator 12.

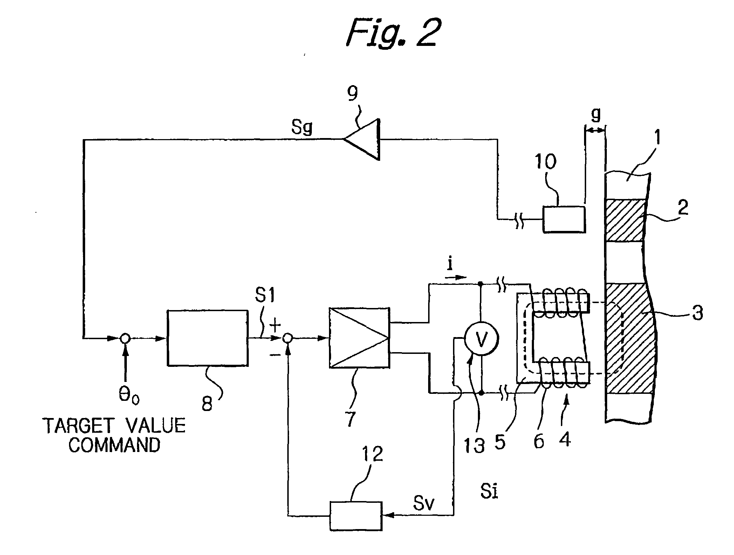

Fig. 2 is a diagram showing a structural example of a magnetic bearing apparatus using the voltage feedback type power amplifier. In the drawing, the components which are the same as or equivalent to those of Fig. 1 are indicated by the same reference numerals. This also applies to the other drawings. This magnetic bearing apparatus is provided with a voltage sensor 13 for detecting a coil voltage applied to the electromagnet coil 6 of the electromagnet 4, and a detection voltage signal Sv detected by the voltage sensor 13 is fed back to the input of the power amplifier 7 through the regulator 12 (negative feedback). As in the magnetic bearing apparatus of Fig. 1, this arrangement helps to improve the delay load characteristics.

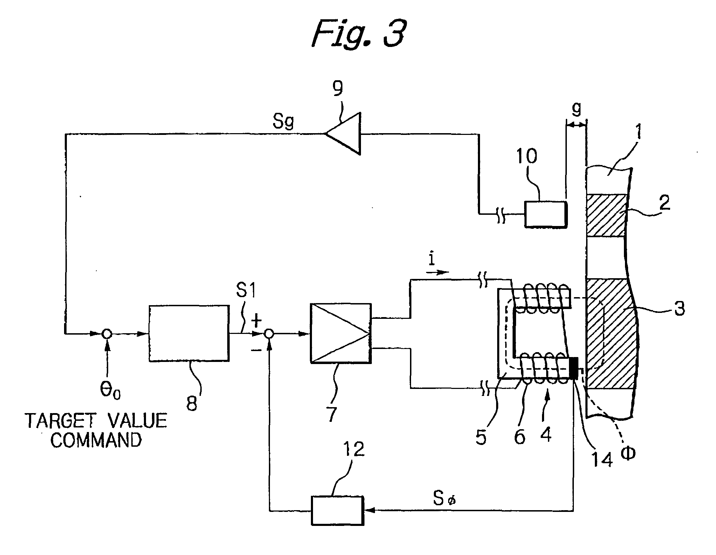

Fig. 3 is a diagram showing a structural example of a magnetic bearing using the magnetic-flux feedback type power amplifier. In this magnetic bearing apparatus, a magnetic flux sensor 14 consisting of a Hall element or the like for detecting a magnetic flux $\phi$ is provided on the surface of an electromagnetic yoke 5 of the electromagnet 4 opposed to the electromagnet target 3. A detected magnetic flux signal $S\phi$ of the magnetic flux sensor 14 is negatively fed back to the input of the power amplifier 7 through the regulator 12. This magnetic flux feedback type power amplifier system has been proposed to improve a phase delay in the magnetic flux (equivalent to a control force), taking into consideration, in addition to the coil load of the electromagnet coil 6, transfer characteristics of the control current i supplied to the electromagnet coil 6 and of the generated magnetic flux $\phi$, which depend on the characteristics of magnetic materials forming the electromagnetic yoke 5 of the electromagnet 4 and the electromagnet target 3. Such an effect as disclosed in the Collection (Part 1) of the Japan Society of Mechanical Engineers, vol. 36, No. 284 (April, 1970), page 578 is known.

At present, in industry, magnetic bearing apparatuses using a current feedback type power amplifier are widely used. This is because the coil current of the electromagnetic coil is a detection parameter necessary for securing safety in the magnetic bearing apparatus and because the feedback system is conveniently closed within the controller. However, it may happen that the electromagnetic coil current and the magnetic flux to be thereby generated exhibit a delay characteristic due to the influence of magnetic and electrical characteristics (hysteresis loss and eddy current loss) of the electromagnetic yoke and the electromagnetic target. This cannot be improved by the current feedback type power amplifier.

As described above, in a magnetic bearing apparatus to be used under a special environment, as in the case of a high-speed rotation apparatus, a rotary apparatus for semiconductor device manufacturing apparatuses which, though rotating at low speed, advantageously supports an object without contact, or a gas circulating fan, it is necessary that the electromagnetic yoke and the electromagnetic target are of a solid structure. In such a magnetic bearing apparatus, there is a serious problem of a delay between the power amplifier input command signal and an actually generated magnetic flux. Further, to realize a magnetic bearing apparatus of a higher control performance. it is necessary to improve such a delay characteristic.

From the viewpoint of the performance of a magnetic bearing apparatus, the magnetic flux feedback type power amplifier constructed as shown in Fig. 3 is preferably used. However, it is necessary to additionally provide a magnetic flux sensor, which must be mounted not within the controller but in the vicinity of the electromagnet of the magnetic bearing apparatus connected with a long cable, resulting in a disadvantage of an increase in the number of signal lines in the cable. For example, if a magnetic bearing apparatus is used in a vacuum atmosphere, it is necessary to take the signal lines out to the outside through a hermetically sealed connector. It is desirable that as small number of connector pins as possible are used. However, this requirement is contradictory to an increase in the number of signal lines in the cable. Further, using a thin Hall element in the magnetic flux sensor is disadvantageous in that such a sensor is easily broken and that there is no space for mounting a secondary coil.

The present invention has been made in view of the above, and an object of the present invention is to provide a magnetic bearing apparatus having no necessity of providing a magnetic flux sensor in the vicinity of a supporting electromagnet and no necessity of increasing the number of signal lines in a cable and capable of achieving an advantage similar to a magnetic flux feedback type power amplifier in a controller.

In order to solve such problems as described above. the present invention provides a control type magnetic bearing apparatus having a supporting electromagnet capable of generating a magnetic force generated by supplying a control current to a coil of a supporting electromagnet from a power amplifier to support a supported member by the magnetic force. The magnetic bearing apparatus comprises a current sensor for detecting a control current output from the power amplifier and a displacement sensor for detecting a displacement of the supported member. Magnetic flux or magnetic flux density estimating means is provided to receive as input signals at least a control current detection signal of the current sensor and a displacement detection signal of the displacement sensor. The estimating means estimates a magnetic flux or magnetic flux density generated between a surface of the electromagnet and an electromagnetic target on the supported member. An estimated value of the magnetic flux or magnetic flux estimating means is fed back to the power amplifier that supplies a control current to a coil of the supporting electromagnet.

As described above, the magnetic flux or magnetic flux density estimating means is provided, and the magnetic flux or magnetic flux density generated between a surface of the electromagnetic and the electromagnetic target on the supported member is estimated on the basis of the control current detection signal of the current sensor and the displacement detection signal of the displacement sensor. The estimated value is fed back to the power amplifier. Consequently, an improvement can be achieved, as in the magnetic flux feedback power amplifier, taking into consideration, in addition to a coil load of an electromagnet coil. transfer characteristics of a current flowing through the electromagnetic coil and generated magnetic fluxes due to characteristics of magnetic materials forming the electromagnetic yoke of the electromagnet and the electromagnetic target. Further, since the magnetic flux density estimating means is disposed within the controller, the number of signal lines within the cable is not increased.

Preferably, a control current detection signal of the current sensor is fed back to the power amplifier. This results in an addition, to a magnetic bearing apparatus according to the present invention, of a conventional current feedback type power amplifier system in which a control current detection signal of the current sensor is fed back to the power amplifier. Consequently, an industrial reliability can be improved.

Preferably, a voltage sensor is provided for detecting a coil voltage of the supporting electromagnet, a coil voltage detection signal of the voltage sensor being fed back to the power amplifier. This results in an addition, to a magnetic bearing apparatus according to the present invention, of a conventional current feedback type power amplifier system in which a coil voltage detection signal of the voltage sensor is fed back to the power amplifier. Consequently, an industrial reliability can be improved.

Fig. 1 is a diagram showing a structural example of a magnetic bearing apparatus which adopts a conventional current feedback type power amplifier; Fig. 2 is a diagram showing a structural example of a magnetic bearing apparatus which adopts a conventional voltage feedback type power amplifier;

Fig. 3 is a diagram showing a structural example of a magnetic bearing apparatus which adopts a conventional magnetic flux feedback type power amplifier;

Fig. 4 is a diagram showing a structural example of a magnetic bearing apparatus in accordance with the present invention;

Fig. 5 is a graph showing a relationship between respective parameters of a magnetic circuit and a magnetic flux density;

Fig. 6 is a graph showing general transfer characteristics of a coil current and a generated magnetic flux or magnetic flux density;

Figs. 7(a) and 7(b) are explanatory diagrams showing a method of simulating a delay characteristic shown in Fig. 6;

Fig. 8 is a diagram showing a structural example of an estimator for estimating a magnetic flux or magnetic flux density used in a magnetic bearing apparatus in accordance with the present invention;

Fig. 9 is a diagram showing another structural example of a magnetic bearing apparatus in accordance with the present invention;

Fig. 10 is a diagram showing a further structural example of a magnetic bearing apparatus in accordance with the present invention; and

Fig. 11 is a diagram showing the structure of an apparatus to which a general magnetic bearing apparatus is adopted.

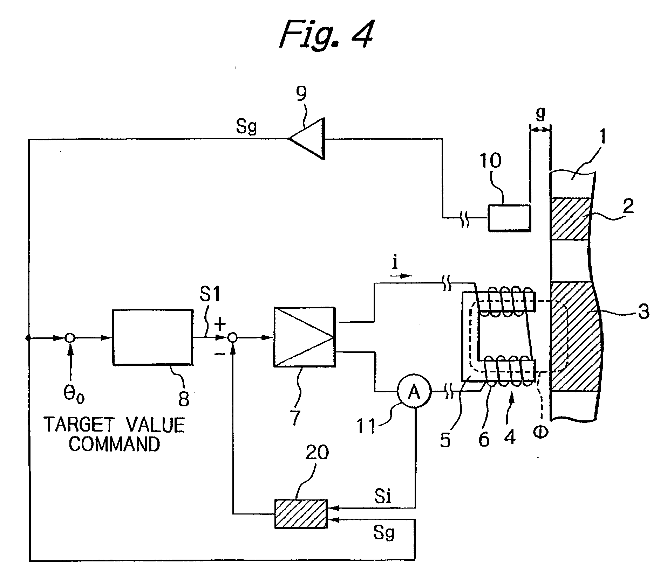

Hereinafter, preferred embodiments of the present invention will be described in more detail with reference to the accompanying drawings. Fig. 4 is a diagram showing a structural example of a magnetic bearing apparatus in accordance with the present invention. In the magnetic bearing apparatus shown in Fig. 4, a displacement sensor 10 and an electromagnet 4 are disposed facing to a sensor target 2 and an electromagnetic target 3 of a supported member 1, respectively. The displacement sensor 10 is connected to a displacement sensor amplifier 9 and outputs a displacement detection signal Sg indicative of a gap length g between the displacement sensor 10 and the sensor target 2. A target position of the supported member 1 is given based on a displacement detection signal Sg and a target command signal $E_o$. A control command signal S1 is outputted to a power amplifier 7 from a compensator 8.

An estimator 20 operates to estimate a magnetic flux or a magnetic flux density which is generated between a surface of an electromagnetic yoke 5 on the supporting member and the electromagnetic target 3 on the supported member 1. To the estimator 20 is inputted a control current detection signal Si detected by a current sensor 11 and the displacement detection signal Sg detected by the displacement sensor 10. The estimator 20 receives the control current detection signal Si and the displacement detection signal Sg as input signals and estimates the magnetic flux $\Phi$ or the magnetic flux density B generated between the surface of the electromagnetic yoke 5 and the electromagnetic target 3, the estimated value being fed back to the input of the power amplifier 7. The adjustment of a gain, for example, is also effected in the estimator 20.

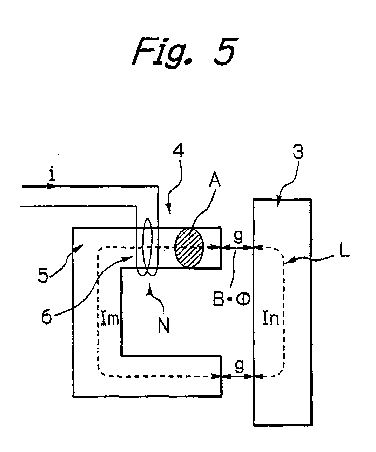

Fig. 5 is a diagram for explaining a magnetic circuit of the electromagnet. The figure shows an example of a magnetic circuit that can ignore a leak magnetic flux. In the figure, a dotted line L denotes an average magnetic path. If there is no leak magnetic flux, the magnetic flux density B is represented by the following:

$$B = iN / \{(2g/\mu_o) + (1_m/\mu_o \mu_{S1}) + (1_n/\mu_o \mu_{S2})\} \ [T] \qquad (1)$$

If

$$(1_m/\mu_o \mu_{S1}) + (1_n/\mu_o \mu_{S2}) << (2g/\mu_o) \qquad (2)$$

then,

$$B \fallingdotseq (\mu_o iN)/(2g) \ [T] \qquad (3)$$

where N denotes the number of turns of the electromagnetic coil; A a cross-sectional area of the electromagnetic yoke; I a current of an electromagnetic coil 6; g a gap between an end surface of the electromagnetic yoke and the electromagnetic target; $1_m$ an average magnetic path length on the electromagnetic yoke side; $1_n$ an average magnetic path length on the electromagnetic target side; B the magnetic flux density; $\phi$ the magnetic flux ($\Phi = B \cdot A$); $\mu_o$ the vacuum magnetic permeability (the same in the atmosphere); $\mu_{s1}$ the specific magnetic permeability on the electromagnetic yoke; and $\mu_{s2}$ the specific magnetic permeability on the electromagnetic target.

Since no leak magnetic flux exists in the electromagnetic yoke 5 having the sectional area A. the magnetic flux $\phi$ at the gap g between the end surface of the electromagnetic yoke 5 and the surface of the electromagnetic target 3 is equal to a product of the magnetic flux density B and the sectional area A. The equation (1) represents a relationship between the magnetic flux density and other parameters. The specific magnetic permeability $\mu_{S1}$ of the electromagnetic yoke and the magnetic permeability $\mu_{S2}$ of the electromagnetic target are variables of the intensity H of the magnetic flux density or magnetic field and the frequency thereof. Conventionally. there are a variety of applications where it is sufficient that those values are considered as constants. If these values cannot be ignored, the magnetic feedback type power amplifier structured as shown in Fig. 3 has been adopted.

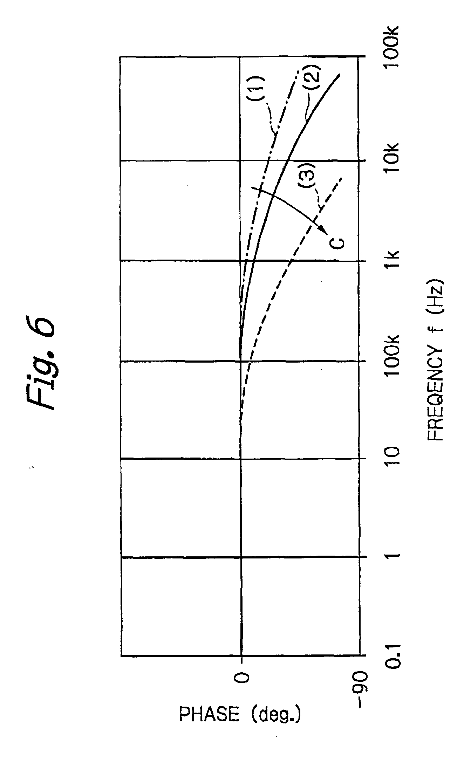

Fig. 6 is a graph showing general transfer characteristics of a coil current of the electromagnet and a generated magnetic flux or magnetic flux density. In this figure, a gain is omitted and a phase characteristic is exhibited. In Fig. 6, a curve (1) exhibits a case in which a laminate structure of a silicon steel plate is used for the electromagnetic yoke and the electromagnetic target; a curve (2) a case in which a drive voltage is high and a laminate structure of a silicon steel plate is used (If the drive voltage is high because of an increase in iron loss, the phase characteristic in the laminate structure of the silicon steel plate is deteriorated as compared with curve (1)); and a curve (3) a case in which a solid magnetic material is used for the electromagnetic yoke and the electromagnetic target.

As shown in Fig. 6, the transfer characteristic of the coil current and the generated magnetic flux or magnetic flux density is a delay characteristic. The delay characteristic is different depending on magnetic materials and constructions that constitute the electromagnetic yoke and the electromagnetic target. The transfer characteristic of the magnetic bearing apparatus for the special purpose tends to show a deteriorated phase characteristic indicated by an arrow C in Fig. 6.

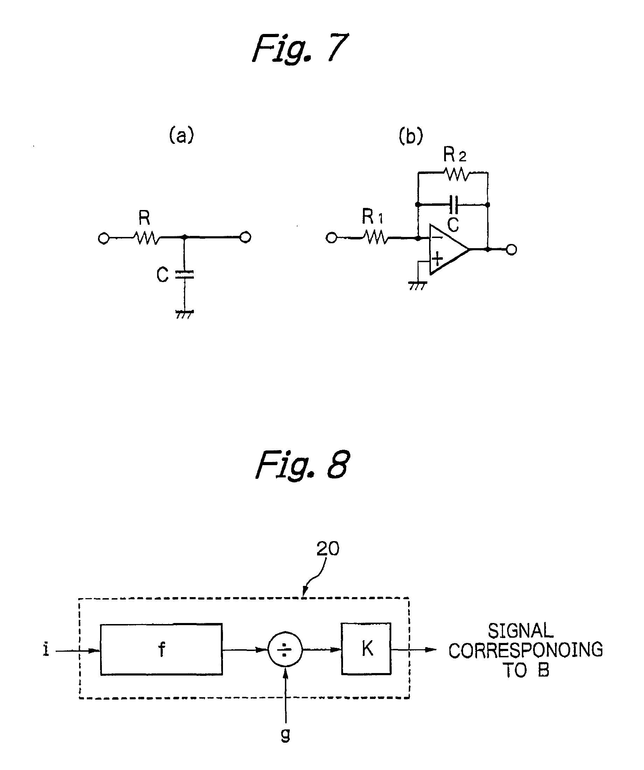

A phase delay transfer function of the coil current of the electromagnetic coil current and the magnetic flux $\phi$ and the magnetic flux density B can be represented by a transfer function equations of low pass filters shown in Figs. 7(a) and 7(b). Such a transfer function can be obtained by curve-fitting actual data and making a calculation of an equation, or can be simulated by a simple analog circuit. Fig. 7(a) shows the structure of a low pass filter using passive elements, and Fig. 7(b) shows the structure of a low pass filter using an operational amplifier.

Fig. 8 is a diagram showing a structural example of the estimator 20. The following equations can be obtained from the relationship of the above equations (1) and (3):

$$B=K(i/g)f \qquad (4)$$

$$\phi=BA \qquad (5)$$

where K is a gain constant defined by the number of turns of the electromagnetic coil 6, an adjustment gain and the like; and f is a characteristic of a simulator that simulates the delay characteristic by a method shown in Fig. 6. If at least the coil current i (the control current detection signal Si of the current sensor 11) and the gap g between the end surface of the electromagnet yoke 5 and the electromagnet target 3 (the displacement detection signal Sg of the displacement sensor 10) are inputted to the simulator, it is possible to obtain a signal corresponding to the magnetic flux density B. Further, since the magnetic flux $\phi$ and the magnetic flux density B exhibit a relationship as indicated by equation (5), a signal corresponding to the magnetic flux $\phi$ can be obtained, if the sectional area A is included in the gain constant K.

As shown in Fig. 4, by using the estimator 20 that estimates the magnetic flux or the magnetic flux density, a signal corresponding to the magnetic flux can be obtained within the controller without detecting the magnetic flux $\phi$ nor increasing the number of signal lines of the cable and is fed back to the power amplifier 7. Input signals necessary for the estimator 20 are the displacement detection signal Sg of the displacement sensor 10 and the control current detection signal Si of the current sensor 11, which signals are generated in a conventional magnetic bearing apparatus.

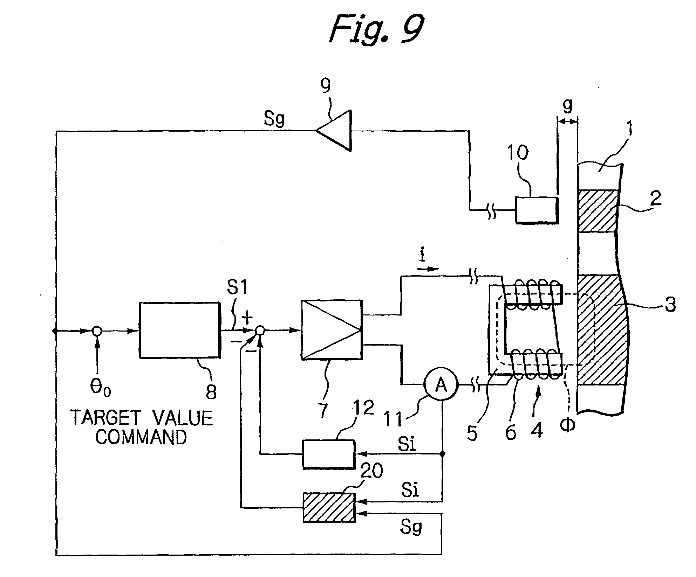

Fig. 9 is a diagram showing another structural example of a magnetic bearing apparatus in accordance with the present invention. The magnetic bearing apparatus shown in Fig. 9 is different from one shown in Fig. 4 in that a adjuster 12 is disposed, and the control current detection signal Si detected by the current sensor 11 is fed back to the power amplifier 7 through the adjuster 12. In other words, the magnetic bearing apparatus shown in Fig. 9 uses the estimator 20 that estimates the magnetic flux or the magnetic flux density, together with a conventional current feedback type power amplifier as shown in Fig. 1.

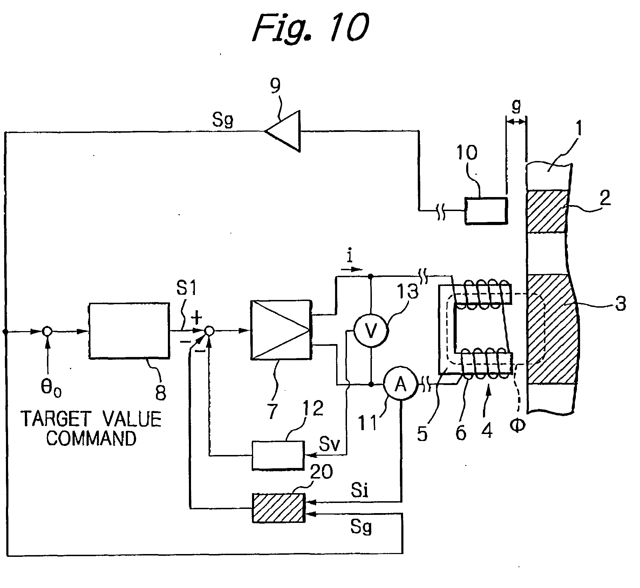

Fig. 10 is a diagram showing a further structural example of a magnetic bearing apparatus in accordance with the present invention. The magnetic bearing apparatus shown in Fig. 10 is different from the magnetic bearing apparatus shown in Fig. 4 in that there are provided an adjuster 12 and a voltage sensor 13 that detects a coil voltage applied to the electromagnetic coil 6. The detected voltage signals Sv detected by the voltage sensor 13 is fed back to the power amplifier 7 through the adjuster 12. In other words, the magnetic bearing apparatus shown in Fig. 10 uses the estimator 20 that estimates the magnetic flux or the magnetic flux density, together with a conventional voltage feedback type power amplifier as shown in Fig. 2.

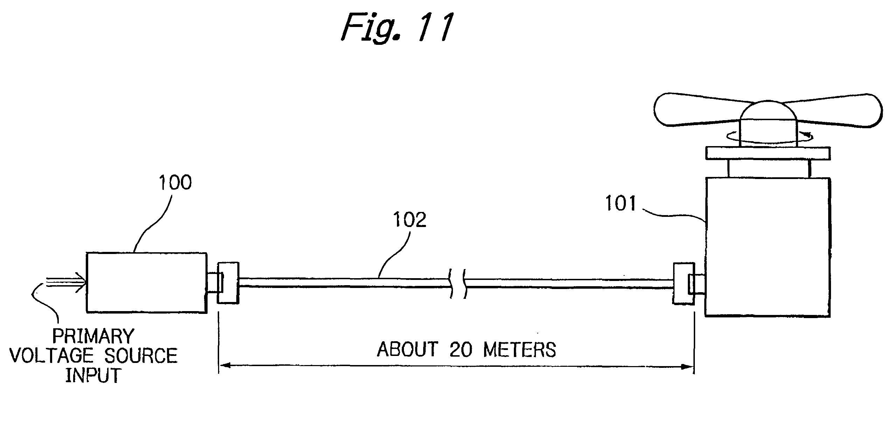

Fig. 11 is a diagram showing the structure of an apparatus that adopts a general magnetic bearing apparatus. A magnetic bearing controller 100 is connected by a relatively long (for example, about 20 m) cable 102 to a rotary machine 101 in which a magnetic bearing apparatus is incorporated for supporting an object without contact. The displacement detection signal Sg of the displacement sensor 10, the control current detection signal Si detected by the current sensor 11 and the detection voltage signal Sv detected by the voltage sensor 13 are transmitted to the magnetic bearing controller 100 from the magnetic bearing apparatus of the rotary machine 101 through the cable 102. The control current i is supplied to rotary machine 101 from the power amplifier 7 of the magnetic bearing controller 100 through the cable 102.

As will be understood from the description made above, the present invention is capable of bringing about various advantages. According to the present invention, since the magnetic flux density estimating means is provided for estimating a magnetic flux or a magnetic flux density generated between a surface of the electromagnet on the supporting side and the electromagnetic target on the supported member. The estimated value is fed back to the power amplifier. Consequently, an improvement can be achieved, as in the magnetic flux feedback power amplifier, taking into consideration, in addition to a coil load of an electromagnet coil, transfer characteristics of a current flowing through the electromagnetic coil and generated magnetic fluxes due to characteristics of magnetic materials forming the electromagnetic yoke of the electromagnet and the electromagnetic target. Further, since the magnetic flux density estimating means is disposed within the controller, the number of signal lines within the cable is not increased.

Further, the present invention is advantageous in that an industrial reliability can be improved by adding, to a magnetic bearing apparatus according to the present invention, a conventional current feedback type power amplifier system in which a coil current detection signal of the current sensor is fed back to the power amplifier. An industrial reliability can also be improved by adding, to a magnetic bearing apparatus according to the present invention, a conventional voltage feedback type power amplifier system in which a coil voltage detection signal of the voltage sensor is fed back to the power amplifier.

The foregoing description of the preferred embodiments of the present invention has been presented for purposes of illustration and description. It is not intended to be exhaustive or to limit the invention to the precise form disclosed, and modifications and variations are possible in light of the above teachings or may be acquired from practice of the invention. It is intended that the scope of the invention be defined by the claims appended hereto, and their equivalents.

## Claims

1. A magnetic bearing apparatus of a control type having a supporting electromagnet capable of generating a magnetic force to support a supported member without contact by the magnetic force generated by supplying a control current to a coil of the electromagnet from a power amplifier, said apparatus comprising:

    a current sensor for detecting the control current output from said power amplifier;
    a displacement sensor for detecting a displacement of said support member; and
    a magnetic flux or a magnetic flux density estimating means which receives at least a control current detection signal of said current sensor and a displacement detection signal of said displacement sensor for estimating a magnetic flux or a magnetic flux density generated between a surface of said electromagnet and the electromagnetic target on said supported member, wherein an estimated value from said estimating means is fed back to said power amplifier.

2. A magnetic bearing apparatus according to claim 1, wherein the control current detection signal of said current sensor is fed back to said power amplifier.

3. A magnetic bearing apparatus according to claim 1, further comprising a voltage sensor for detecting a coil voltage of said supporting electromagnet, a coil voltage detection signal of said voltage sensor being fed back to said power amplifier.

# Fig. 1

*Fig. 2*

TARGET VALUE COMMAND

## Fig. 3

TARGET VALUE
COMMAND

## Fig. 4

TARGET VALUE COMMAND

## Fig. 5

# Fig. 6

## *Fig. 7*

(a)

(b)

## *Fig. 8*

SIGNAL
CORRESPONOING
TO B

Fig. 9

TARGET VALUE COMMAND

14

Fig. 10

EP 1 176 325 A2

*Fig. 11*

100

102

101

PRIMARY
VOLTAGE SOURCE
INPUT

ABOUT 20 METERS

EP 1 176 325 A2